# EUROPÄISCHE PATENTANMELDUNG

(11) **EP 4 335 735 A1**
(43) Veröffentlichungstag der Anmeldung: **13.03.2024**
(21) Anmeldenummer: 22020428.3
(22) Anmeldetag: 06.09.2022
(51) Int. Cl.: B62K 7/04, B62K 13/04, B62M 6/40

(54) **SET ZUM UMWANDELN EINES FAHRRADS IN EIN LASTENFAHRRAD**

(71) Anmelder: Tomek, Dominik, 21075 Hamburg (DE); Ostrowski, Kolja, 28279 Bremen (DE); Dahms, Constantin, 22607 Hamburg (DE)
(72) Erfinder: Tomek, Dominik, 21075 Hamburg (DE); Ostrowski, Kolja, 28279 Bremen (DE); Dahms, Constantin, 22607 Hamburg (DE)

(57) **Zusammenfassung**

Die Erfindung beschreibt ein Set zum Umwandeln eines Fahrrads in ein Lastenfahrrad. Mittels der Erfindung kann ein Fahrrad insbesondere ein E-Bike schnell und unkompliziert in ein Lastenfahrrad umgebaut werden. Dieser Umbau erfordert nur wenige Handgriffe und kein Werkzeug.

Die dafür notwendige Verbindung koppelt die mechanischen Komponenten, zur Steuerung, ebenso wie elektrische und hydraulische Komponenten zur Versorgung verschiedener Vorbauten. Die erfindungsgemäße Kupplung kommt ohne zusätzliche Abstützungselemente aus.

Die Erfindung beschreibt mehrere modulare Vorderteile, wie zum Beispiel einem Modul, dass passiven Insassenschutz bietet, oder einem Modul, dass eine separate Box zum Transport von unterschiedlichsten Produkten aufnehmen kann.

## Beschreibung

Aktuell existieren Fahrräder in den verschiedensten Ausführungen und mit unterschiedlichen Funktionen, wobei ein Großteil dieser Fahrräder nur eine Funktion erfüllt. So gibt es u.a. Lastenräder, die dem Transport von Lasten oder Personen dienen und je nach Aufgabe und Einsatzgebiet mit verschiedenen An- und Aufbauten ausgerüstet sind. Diese sind in der Regel komplette Fahrzeuge, die nicht in ihre einzelnen Teilrahmen aufteilbar sind. Zwar gibt es auch Lastenräder, die sich auftrennen und wieder zusammenbauen lassen, doch ist für den Umbau WerkzeugEinsatz notwendig und die Lenkung des Vorderrades sowie dessen Bremsleitung und andere Leitungen müssen auch noch separat aufgetrennt/zusammengebaut werden.

Die CH 708860 A2 zeigt ein solch umbaubares Lastenrad.

So kann ein Lastenrades, selbst wenn es nur für ganz bestimmte Verwendungen eingesetzt wird und für alle anderen Aufgaben ein anderes Transportmittel/ Fahrräder verwendet wird, sicher sehr praktisch und von großen Nutzen sein, wenn denn auch noch genügend Stellfläche für weitere Transportmittel/Fahrräder vorhanden ist. Doch nicht jeder hat ausreichend Stellfläche für mehrere Fahrräder zur Verfügung. Vor diesem Hintergrund ist es eine Aufgabe der Erfindung ein schnell und unkompliziert um- und zurückbaubares Fahrrad/Lastenrad, insbesondere E-Bike/E-Lastenrad bereitzustellen.

So kann mit der vorliegenden Erfindung ein Fahrrad in ein Lastenfahrrad, insbesondere ein E-Bike in ein E-Lastenfahrrad, in nur wenigen Handgriffen und ganz ohne Werkzeug umgebaut werden.

Diese Aufgabe wird erfindungsgemäß in einem ersten Aspekt gelöst durch ein Set zum Umwandeln eines Fahrrads in ein Lastenfahrrad, insbesondere eines E-Bikes in ein E-Lastenfahrrad, umfassend ein modulares Transportmittel mit einem modularen Vorderteil und eine Anschlussvorrichtung, wobei das Fahrrad, insbesondere das E-Bike, einen Rahmen mit einem Vorbau und eine über ein Steuerrohr am Rahmen befestigte Steuereinheit umfasst, dadurch gekennzeichnet, dass die Anschlussvorrichtung nur aus einer Befestigungskonstruktion besteht. D.h. dass die Anschlussvorrichtung nur eine Kupplung aufweist.

In einer bevorzugten Ausführungsform des erfindungsgemäßen Sets wird die Anschlussvorrichtung nur an einem Anbindungspunkt, insbesondere an einem vorderen Anbindungspunkt, des Rahmens befestigt. Die Anschlussvorrichtung wird somit nur über einen Punkt mit dem Rahmen verbunden.

In einer weiteren Ausführungsvariante verbleibt die Steuereinheit durchgängig am Rahmen bei der Umwandlung des Fahrrads zu einem Lastenfahrrad, insbesondere des E-Bikes zu einem Elektro-Lastenfahrrad, und wird nicht demontiert. Die Steuereinheit ist somit nicht Bestandteil der Anschlussvorrichtung und/oder des modularen Transportmittels.

In einer anderen Ausführungsvariante kann die Anschlussvorrichtung komplett ohne Werkzeug an dem Rahmen montiert und/oder demontiert werden.

In einer weiteren Ausführungsvariante ist die Anschlussvorrichtung bei der Umwandlung des Fahrrads zu einem Lastenfahrrad, insbesondere des E-Bikes zu einem E-Lastenfahrrad, in das modulare Vorderteil des modularen Transportmittels und/oder dem Steuerrohr des Fahrrads, insbesondere des E-Bikes, integriert. D.h. das Steuerrohr und/oder das modulare Vorderteil sind derart modifiziert, dass ein Feder-Kugel-Verschluss darin untergebracht werden kann und so das modulare Vorderteil oder das Steuerrohr ankuppelt werden kann.

In einer noch anderen Ausführungsvariante ist die Anschlussvorrichtung eine abstützungsfreie, integrale Tri-Kupplung. D.h. die Anschlussvorrichtung kuppelt den Rahmen mit dem modularen Vorderteil und verbindet dabei sowohl Lasten als auch Hydraulik und Elektrik zwischen Rahmen und modularen Vorderteil ohne zusätzliche Abstützungselemente.

In einer optionalen Ausführungsform des erfindungsgemäßen Sets umfasst die Anschlussvorrichtung ein erstes äußeres Gehäuse, ein zweites inneres Gehäuse, einen oder mehrere Schieber, einen oder mehrere Deckel, eine oder mehrere Wellen eine oder mehrere Federn und/oder zwei oder mehrere Kugeln.

Ferner weist die Anschlussvorrichtung einen Feder-Kugelverschluss auf. Die Verbindung des modularen Transportmittels mit dem Rahmen über die Anschlussvorrichtung erfolgt also über federgelagerte Kugeln.

In einem weiteren Aspekt verbindet die Anschlussvorrichtung Stromanschlüsse, transferiert Lasten und/oder ermöglicht Bewegungskopplungen. So sind in der Anschlussvorrichtung hydraulische und stromführende Leitungen integriert.

In einer optionalen Ausführungsform des erfindungsgemäßen Sets umfasst das modulare Vorderteil des modularen Transportmittels Führungselemente zum korrekten Ab- und Abkoppeln der Aufbauten und/oder Sicherungselemente zur Sicherung der Aufbauten und/oder Mittel zur Stromversorgung des Aufbaus und/oder Laufrollen zum schnellen An- und Abkoppeln der Aufbauten. Die Führungselemente können im Besonderen Schienen sein. Die Mittel zur Stromversorgungen können ein batteriegespeistes Bordnetz optional gekoppelt mit Solarzellen sein um Versorger, wie Beleuchtung, GPS, Entertainment- und Messsysteme und/oder die Aufbauten mit Kühl oder Heizsystemen zu versorgen. Ebenso kann die Versorgung genutzt werden um die Gesamtreichweite des E-Bikes, insbesondere E-Lastenfahrrad zu verlängern durch Rückspeisung in die Versorgung des Grundfahrrads. Die Sicherungselemente können zum Beispiel einen oder mehrere Fang- und Sicherungshaken, umfassen, die automatisch einrasten.

In einer weiteren Ausführungsvariante kann das modulare Vorderteil eine Transportbox aufnehmen. In einer optionalen Ausführungsvariante weist das modulare Vorderteil eine oder mehrere Heiz- und/oder Kühlvorrichtungen auf. So kann der Inhalt der Transportbox gekühlt oder geheizt werden. Dies ist bspw. von großem Vorteil, wenn die vorliegende Erfindung im Bereich der Lieferantendienste zum Austragen von Lebensmittel und fertigen Speisen verwendet wird.

Ferner umfasst die Transportbox zwei oder mehrere Standfüße, insbesondere vier Standfüße, die beim Ankoppeln automatisch einfahren und bei Abkoppeln automatisch ausfahren. So fahren ein oder mehrere erste Standfüße beim Lösen der Sicherungshaken aus und die Transportbox steht sogleich fest auf dem Boden. Das Lastenrad, insbesondere das E-Lastenrad, mit dem modularen Vorderteil kann unter der Transportbox weggezogen werden, wobei ein oder mehrere zweite Standfüße automatisch ausfahren und die Transportbox unabhängig von dem modularen Vorderteil stehen kann. Der Benutzer muss sich somit auch nicht bücken, um die Transportbox zu be- oder entladen. Das automatische Ausfahren der Standfüße erfolgt über eine Federlagerung der Standfüße.

In einer optionalen Ausführungsform des erfindungsgemäßen Sets umfasst das modulare Vorderteil einen passiven Insassenschutz, insbesondere Gurt und/oder Überrollbügel und/oder Witterungsschutz für den Innenraum und/oder eine Abdeckung, die Schutz bei Unfällen bietet und/oder die Sichtbarkeit des Fahrers auf Insassen des Vorbaus und auf den vor dem Transportsystem liegenden Weg gewährleistet. So kann die Abdeckung aus verstärkten Kunststoffen oder Kunststoffen wie ABS, Thermoplasten oder auch Naturfasern bestehen, die den Anforderungen genügen und in mechanischen und/oder thermischen Umformungsverfahren gefertigt sind. Optional weist die Abdeckung ein oder mehrere Sichtfenster aus splittersicheren "Plexiglas" auf

Weiter kann in der Abdeckung Beleuchtung bzw. Warnleuchten untergebracht sein. Insbesondere kann die Abdeckung flexible Solarzellen umfassen um die Reichweite des Gesamtfahrzeuges zu verlängern. Optional lässt sich die Abdeckung von vorne und/oder seitlich öffnen. Ferner können in der Abdeckung ebenfalls abschließbare Staufächer für Kleidung, Einkäufe etc. enthalten sein. In einer besonderen Ausführungsvariante weißt das modulare Vorderteil eine Verkleidung aus einem glasfaserverstärkten Laminat und/oder einen integrierten Gitterrohrahmen auf, der bei einer Kollision den Hauptteil der Kräfte aufnehmen und ableiten soll. Somit bleiben die Insassen geschützt. Die Sitze sowie die Sicherheitsgurte sind fest mit Rahmen verbunden. Die stabile Bauweise stellt sicher, dass die Insassen bei einem Aufprall nicht aus dem Fahrzeug geschleudert werden. Die abschließbaren Staufächer schützen die Insassen vor herumfliegenden Gegenständen.

Im Folgenden soll das Verfahren zum Umwandeln eines Fahrrads in ein Lastenfahrrad, insbesondere eines E-Bikes in ein E-Lastenfahrrad, mit Hilfe des erfindungsgemäßen Sets beschrieben werden.

Das modulare Transportmittel und der Rahmen des Fahrrads, insbesondere des E-Bikes, werden zueinander gebracht und grob ausgerichtet. Die im modularen Vorderteil und/oder Steuerrohr integrierte Steckachse wird jeweils in die Anschlussvorrichtung eingeführt. Dabei sind Schieflagen und Winkel irrelevant, da sich die Steckachse an den Kugeln zentriert und über die gegengelagerte Steckachse ausrichtet. Durch Ausüben von Druck auf beispielsweise die Steuereinheit wird die Steckachse in die Anschlussvorrichtung gedrückt. Durch die Geometrie der Steckachse werden die Kugeln und der Schieber nach unten gedrückt und die Feder komprimiert. Sobald der Schieber soweit heruntergedrückt wurde, dass die Kugeln in einen Rezess ausweichen und die Steckachse weiter in die Anschlussvorrichtung eindringt, entsteht ein Formschluss zwischen Rezess in der Steckachse und den Kugeln. Das Ausüben von Druck schließt ebenso die elektrischen und hydraulischen Verbindungen.

Für das Abkoppeln des Transportmoduls ist zunächst der Schieber zu betätigen, sodass die Feder zusammengedrückt wird. In einem zweiten Schritt werden die Steckachsen herausgelöst und somit das modulare Transportmittel freigegeben.

Die Geometrie von Innengehäuse und von Schieber ist so ausgeführt, dass die Kugeln auch im gelösten Zustand im Gehäuse verbleiben und nicht verloren gehen können. Um eine einwandfreie Funktionalität zu gewährleisten, sind sowohl hydraulische- als auch stromführende Leitungen in der Anschlussvorrichtung integriert. Die hydraulischen und stromführenden Leitungsverbindungen werden beim Lösen der Anschlussvorrichtung getrennt. Die hydraulische Leitungsverbindung erfolgt über eine verlustfreie Flachkupplung, deren Öffnen an die Trennung des modularen Transportmittels von dem Rahmen gebunden ist. Durch die Formgebung der Steckachse und den vorgegebenen Formschluss sind die Kupplungen beim Schließen des Mechanismus automatisch zueinander ausgerichtet. Durch die Kraftaufwendung beim Schließen der Anschlussvorrichtung, werden jeweils sowohl Strom- als auch Hydraulikleitungen miteinander verbunden.

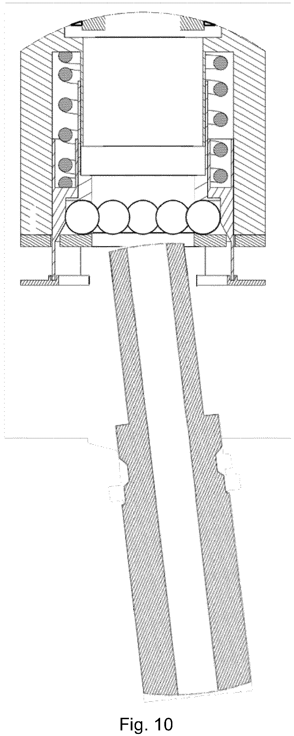

Anhand der Fig. 1 bis Fig. 10 wird die Erfindung in ihren Details im Wesentlichen erklärt.
Fig. 1: Steuerrohr mit integrierter Anschlussvorrichtung (links verbunden, rechts entkoppelt)
Fig. 2: Anschlussvorrichtung Detail (verriegelt)
Fig. 3: Anschlussvorrichtung Detail (entriegelt)
Fig. 4: Verriegelungsflächen
Fig. 5: Anschlussvorrichtung komplett
Fig. 6: Hydraulik- und Stromverbindung
Fig. 7: Modulares Vorderteil in Transportkonfiguration
Fig. 8: Modulares Vorderteil mit Transportbox
Fig. 9 Modulares Vorderteil in Personenkonfiguration
Fig. 10: Einführung Steckachse in Anschlussvorrichtung

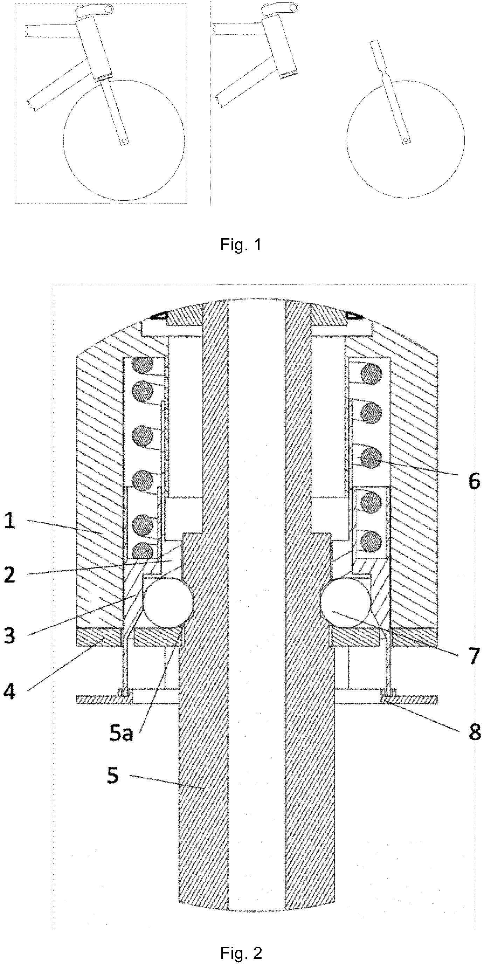

Fig. 2 zeigt die verriegelte Anschlussvorrichtung mit dem äußeren Gehäuse 1, dem inneren Gehäuse 2, dem Schieber 3, dem Deckel 4, der Steckachse 5, der Feder 6, den Kugeln 7 und dem Griff 8. Das erste äußere Gehäuse 1 umschließt das Gesamtsystem und schützt es vor äußeren Einflüssen. Es bietet Anbindungspunkte an das modulare Transportmittel und den Rahmen des Fahrrads, insbesondere des E-Bikes, und kann mit dem Deckel 4 verschlossen werden. Das zweite innere Gehäuse 2 stellt die innere Auflagefläche der Kugeln 7 dar. Es wird durch das erste äußere Gehäuse 1 geführt, wobei das zweite innere Gehäuse 2 einen Bewegungsspielraum aufweist, um einen Freigang für die Kugeln 7 zu ermöglichen. Der innere Teil der Auflagefläche des inneren Gehäuses 2 zeichnet sich durch eine Geometrie aus, die ein Herausfallen der Kugeln 7 im gelösten Zustand verhindert, in dem der Spalt zwischen Gehäuse 2 und Deckel 4 kleiner ist als der Durchmesser der Kugeln 7. Der Schieber 3 erfüllt drei Funktionen: Er führt die Feder 6 und stellt die äußere Auflagefläche der Kugeln 7. Außerdem ist die Geometrie so gewählt, dass beim Betätigen des Schiebers 3 über den Griff 8 ein Freiraum geschaffen wird, über den die Kugeln 7 sich nach außen bewegen können und die Steckachse 5 zum Lösen freigeben. Der Deckel 4 schließt das Gesamtsystem mit dem äußeren Gehäuse 1 ab und bietet durch seine Formgebung als Gegenstück zum zweiten inneren Gehäuse 2 einen Schutz vor dem Herausfallen der Kugeln 7. Die Steckachse 5 ist das Anbindungselement an das modulare Vorderteil des modularen Transportmittels. Durch einen Formschluss werden die Steuerbewegungen übertragen. Außerdem bietet die Steckachse 5 einen Rezess 5a, um eine Auflagerfläche für die Kugeln 7 zu bieten, damit das System schließen kann.

Der Verschluss der Anschlussvorrichtung erfolgt über die federgelagerte Kugeln 7, die in die Steckachse 5 einrasten.

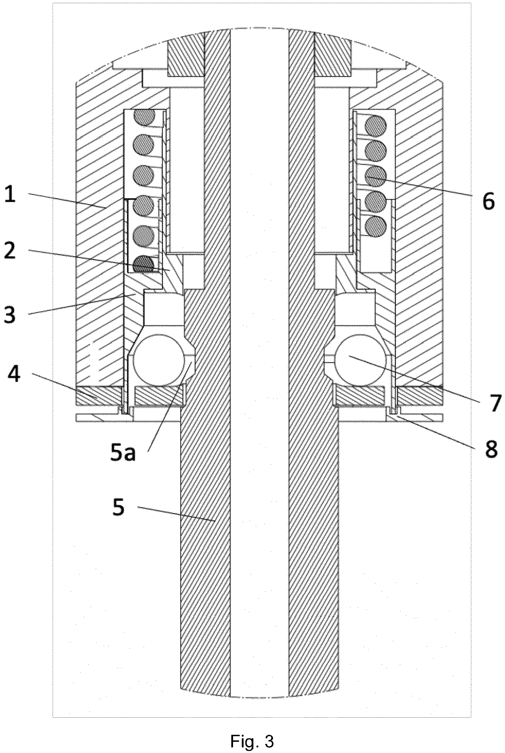

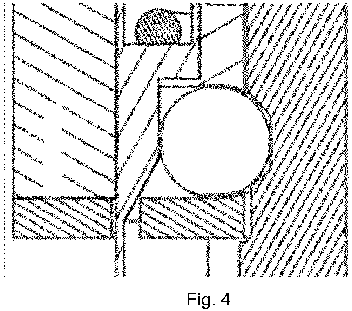

Der Verschluss der Anschlussvorrichtung erfolgt somit im Genauen, wie in Fig. 4 dargestellt, über den Schluss zwischen Steckachse 5, innerem Gehäuse 2, Schieber 3 und Deckel 4, welcher durch die Kugeln 7 hergestellt wird. Das System ist permanent vorgespannt, so dass ein versehentliches Lösen nicht möglich ist. Bei einem Entriegeln der Anschlussvorrichtung, wie in Fig. 3 dargestellt, kann die Feder zusammengedrückt werden, was den Druck vom inneren Gehäuse 2 und den Kugeln 7 nimmt, so dass diese sich von der Steckachse 5 lösen und nach außen in den Rezess 5a des Schiebers 3 ausweichen womit der Verschluss geöffnet werden kann.

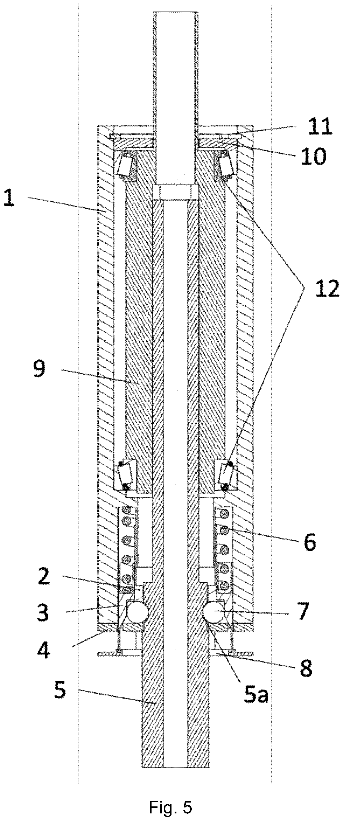

Fig. 5 zeigt weitere Elemente der Anschlussvorrichtung mit der Welle 9, dem oberen Deckel 10, eine Ringsicherung 11, und Lagern 12. Die Welle 9 ist eine Hohlwelle, die die Steckachse 5 aufnimmt und über einen Formschluss die Steuerbewegungen überträgt. Die Auflagefläche zwischen Welle 9 und Steckachse 5 transferiert alle Lasten vom modularen Vorderteil des modularen Transportmittels über die Lager 12 in das äußere Gehäuse 1 in den Rahmen des Fahrrads, insbesondere E-Bikes. Der obere Teil der Welle 9 weist einen Durchmesser auf, der es ermöglicht verschiedene Vorbauten und entsprechende Lenker anzubringen. Der Deckel 10 schließt das Gehäuse 1 nach oben ab und spannt die Lager 12 vor. Eine Sicherung des Deckels erfolgt über die Ringsicherung 11, welches insbesondere ein Sprengring ist. Die Lager 12 ermöglichen eine rotatorische Bewegung der Welle 9 und der formschlüssig verbundenen Steckachse 5, was eine Lenkbewegung ermöglicht. Die Kugeln 7, die zur Sicherung genutzt werden, unterstützen diese Rotation. Außerdem transferieren die Lager 12 alle translatorischen Kräfte vom modularen Vorderteil über Steckachse 5 und Welle 9 in das äußere Gehäuse 1.

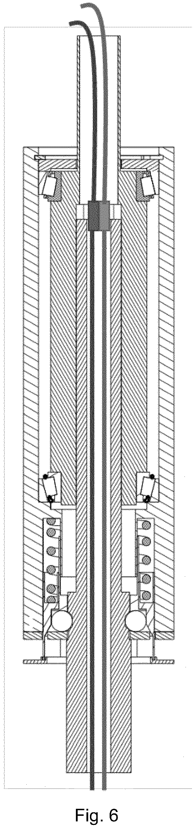

Fig. 6 zeigt die Integration von Strom- und Hydraulikleitung. Steckachse 5 und Welle 9 sind als Hohlwellen ausgeführt, was es ermöglicht eine Hydraulikleitung und Stromleitung zu integrieren. In verriegeltem Zustand wird die Stromleitung über eine Steckverbindung und die Hydraulikleitung über eine verlustfreie Flachkupplung verbunden. Die Leitungen können alternativ auch außerhalb von Gehäuse 1 verlegt, befestigt und gekuppelt werden.

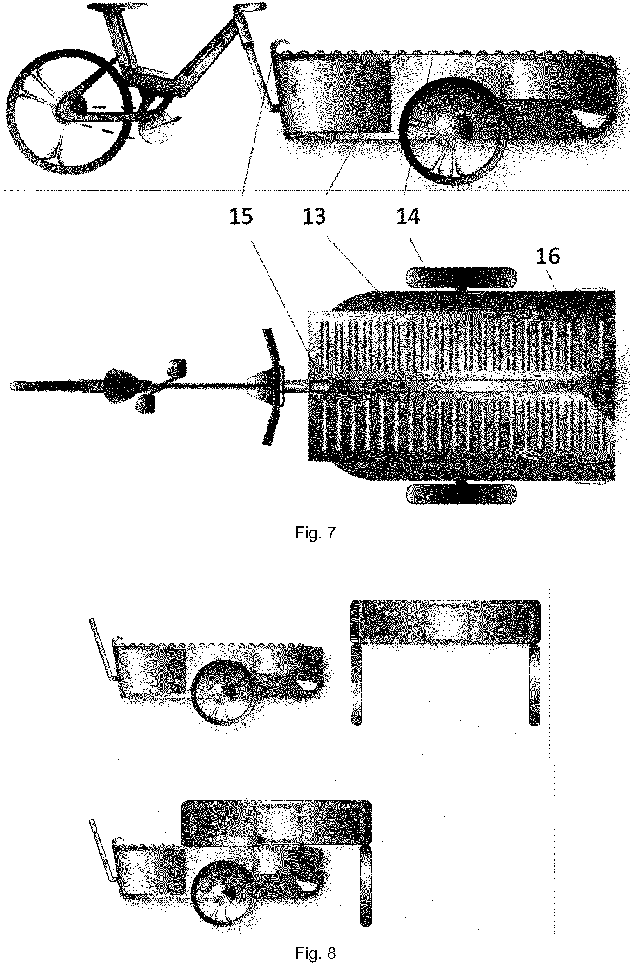

Fig. 7 zeigt eine optionale Ausführungsform des erfindungsgemäßen Sets bei der das modulare Vorderteil 13 des modularen Transportmittels Führungselemente 16 zum korrekten Positionieren der Aufbauten umfasst sowie Sicherungselemente 15 zur strukturellen Integration der Aufbauten in das modulare Vorderteil, um versehentlichen Lösen der Aufbauten zu vermeiden. Weiter umfasst das modulare Vorderteil in dieser Ausführungsform Laufrollen 14 zum schnellen An- und Abkoppeln der Aufbauten.

Fig. 8 zeigt eine weitere Ausführungsvariante, bei der das modulare Vorderteil eine Transportbox aufnehmen kann.

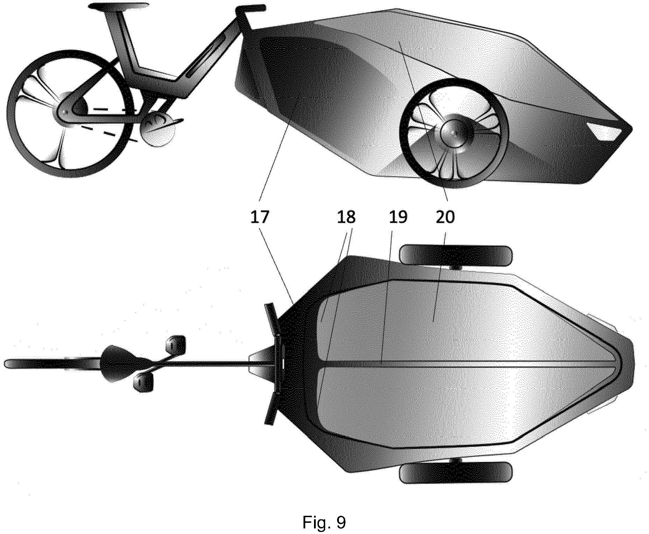

Fig. 9 zeigt einer optionale Ausführungsform des erfindungsgemäßen Sets, bei der der modulare Vorderteil einen passiven Insassenschutz, insbesondere einen oder mehrere Gurte 18 und/oder Überrollbügel 19 und/oder Witterungsschutz 20 für den Innenraum und/oder eine Abdeckung, die Schutz bei Unfällen bietet und/oder die Sichtbarkeit des Fahrers auf Insassen des modularen Vorderteils und auf den vor dem Transportsystem liegenden Weg gewährleistet.

## Patentansprüche

1. Ein Set zum Umwandeln eines Fahrrads in ein Lastenfahrrad, insbesondere eines E-Bikes in ein E-Lastenfahrrad, umfassend ein modulares Transportmittel mit einem modularem Vorderteil und eine Anschlussvorrichtung, wobei das Fahrrad, insbesondere das E-Bike, einen Rahmen mit einem Vorbau und eine über ein Steuerrohr am Rahmen befestigte Steuereinheit umfasst, **dadurch gekennzeichnet, dass** die Anschlussvorrichtung nur aus einer Befestigungskonstruktion besteht.

2. Ein Set zum Umwandeln eines Fahrrads in ein Lastenfahrrad, insbesondere eines E-Bikes in ein E-Lastenfahrrad gemäß Anspruch 1 **dadurch gekennzeichnet, dass** die Anschlussvorrichtung nur an einem Anbindungspunkt, insbesondere an einem vorderen Anbindungspunkt, des Rahmens befestigt wird.

3. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Steuereinheit am Rahmen bei der Umwandlung des Fahrrads zu einem Lastenfahrrad, insbesondere des E-Bikes zu einem E-Lastenfahrrad, durchgängig verbleibt und nicht demontiert wird.

4. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung komplett ohne Werkzeug an dem Rahmen montiert und/oder demontiert werden kann.

5. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung bei der Umwandlung des Fahrrads zu einem Lastenfahrrad, insbesondere des E-Bikes zu einem E-Lastenfahrrad, im dem modularen Vorderteil des modularen Transportmittels und/oder dem Steuerrohr des Fahrrads, insbesondere des E-Bikes, integriert ist.

6. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung eine abstützungsfreie, integrale Tri-Kupplung ist.

7. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung ein erstes äußeres Gehäuse, ein zweites inneres Gehäuse, einen oder mehrere Schieber, einen oder mehrere Deckel, eine oder mehrere Wellen, eine oder mehrere Federn und/oder zwei oder mehrere Kugeln umfasst.

8. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung ein Feder-Kugelverschluss aufweist.

9. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung Stromanschlüsse verbindet, Lasten transferiert und/oder Bewegungskopplungen ermöglicht.

10. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** das modulare Vorderteil des modularen Transportmittels
a. ein oder mehrere Führungselemente zum korrekten Ab- und Abkoppeln der Aufbauten und/oder
b. ein oder mehrere Sicherungselemente zur strukturellen Sicherung der Aufbauten und/oder
c. ein oder mehrere Mittel zur Stromversorgung des Aufbau aufweist und/oder
d. ein oder mehrere Laufrollen zum schnellen An- und Abkoppeln der Aufbauten
umfasst.

11. Ein Set zum Umwandeln eines Fahrrads in ein Lastenfahrrad, insbesondere eines E-Bikes in ein E-Lastenfahrrad, gemäß Anspruch 10 **dadurch gekennzeichnet, dass** die Sicherungselemente einen oder mehrere Fang- und Sicherungshaken umfassen, die automatisch einrasten.

12. Ein Set zum Umwandeln eines Fahrrads in ein Lastenfahrrad, insbesondere eines E-Bikes in ein E-Lastenfahrrad, gemäß einem der vorangegangen Ansprüche, **dadurch gekennzeichnet, dass** das modulares Vorderteil eine Transportbox aufnehmen kann

13. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass**, dass das modulare Vorderteil eine oder mehrere Heiz- und/oder Kühlvorrichtungen aufweist.

14. Ein Set zum Umwandeln eines Fahrrads in ein Lastenfahrrad, insbesondere eines E-Bikes in ein E-Lastenfahrrad, gemäß Anspruch 12, **dadurch gekennzeichnet, dass** die Transportbox zwei oder mehrere Standfüße, insbesondere vier Standfüße, umfasst, die beim Ankoppeln automatisch einfahren und bei Abkoppeln automatisch ausfahren.

15. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** das modulare Vorderteil
a. einen passiven Insassenschutz, insbesondere Gurt und/oder Überrollbügel und/oder
b. Witterungsschutz für den Innenraum und/oder
c. eine Abdeckung, die Schutz bei Unfällen bietet und/oder die Sichtbarkeit des Fahrers auf Insassen des Vorbaus und auf den vor dem Transportsystem liegenden Weg gewährleistet
umfasst.

## Geänderte Patentansprüche

### Geänderte Patentansprüche gemäss Regel 137(2) EPÜ.

1. Ein Set zum Umwandeln eines Fahrrads in ein Lastenfahrrad, insbesondere eines E-Bikes in ein E-Lastenfahrrad, umfassend ein modulares Transportmittel mit einem modularen Vorderteil, dass eine Ladefläche für hohe Lasten beinhaltet, sowie eine Anschlussvorrichtung, wobei das Fahrrad, insbesondere das E-Bike, einen Rahmen mit einem Vorbau und eine über ein Steuerrohr am Rahmen befestigte Steuereinheit umfasst, **dadurch gekennzeichnet, dass** die Anschlussvorrichtung nur aus einer Befestigungskonstruktion besteht die eine Verbindung zwischen Rahmen und jedem modularem Vorderteil in nur einem Punkt ermöglicht.

2. Ein Set zum Umwandeln eines Fahrrads in ein Lastenfahrrad, insbesondere eines E-Bikes in ein E-Lastenfahrrad gemäß Anspruch 1 **dadurch gekennzeichnet, dass** die Anschlussvorrichtung nur an einem Anbindungspunkt, insbesondere an einem vorderen Anbindungspunkt, des Rahmens befestigt wird und für jede mögliche Kombination mit einem beliebigen Vorbau kein weiterer Anschlusspunkt benötigt wird.

3. Ein Set zum Umwandeln eines Fahrrads in ein Lastenfahrrad, insbesondere eines E-Bikes in ein E-Lastenfahrrad gemäß einem der vorangegangenen Ansprüche, **dadurch gekennzeichnet, dass** bei der Umwandlung des Fahrrads zu einem Lastenfahrrad, insbesondere des E-Bikes zu einem E-Lastenfahrrad die Steuereinheit bestehend aus Lenk- und Bremseinrichtung, sowie elektrischer Leitungen durchgängig am, Rahmen verbleibt und nicht demontiert werden muss.

4. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung komplett ohne Werkzeug an dem Rahmen montiert und/oder demontiert werden kann.

5. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung bei der Umwandlung des Fahrrads zu einem Lastenfahrrad, insbesondere des E-Bikes zu einem E-Lastenfahrrad, im dem modularen Vorderteil des modularen Transportmittels und/oder dem Steuerrohr des Fahrrads, insbesondere des E-Bikes, integriert ist.

6. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung mechanische Bewegungen und Lasten, elektrische und hydraulische Verbdinungen herstellt, nur an einem Punkt mit dem Rahmen verbunden ist und damit eine abstützungsfreie, integrale Tri-Kupplung darstellt.

7. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung ein erstes äußeres Gehäuse, ein zweites inneres Gehäuse, einen oder mehrere Schieber, einen oder mehrere Deckel, eine oder mehrere Wellen, eine oder mehrere Federn und/oder zwei oder mehrere Kugeln umfasst.

8. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung ein Feder-Kugelverschluss aufweist.

9. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** die Anschlussvorrichtung Stromanschlüsse verbindet, Lasten transferiert und/oder Bewegungskopplungen ermöglicht.

10. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** das modulare Vorderteil des modularen Transportmittels
a. ein oder mehrere Führungselemente zum korrekten Ab- und Abkoppeln der Aufbauten und/oder
b. ein oder mehrere Sicherungselemente zur strukturellen Sicherung der Aufbauten und/oder
c. ein oder mehrere Mittel zur Stromversorgung des Aufbaus aufweist und/oder
d. ein oder mehrere Laufrollen zum schnellen An- und Abkoppeln der
Aufbauten
umfasst.

11. Ein Set zum Umwandeln eines Fahrrads in ein Lastenfahrrad, insbesondere eines E-Bikes in ein E-Lastenfahrrad, gemäß Anspruch 10 **dadurch gekennzeichnet, dass** die Sicherungselemente einen oder mehrere Fang- und Sicherungshaken umfassen, die automatisch einrasten.

12. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** das modulare Vorderteil eine Transportbox aufnehmen kann

13. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass**, dass das modulare Vorderteil eine oder mehrere Heiz- und/oder Kühlvorrichtungen aufweist.

14. Ein Set zum Umwandeln eines Fahrrads in ein Lastenfahrrad, insbesondere eines E-Bikes in ein E-Lastenfahrrad, gemäß Anspruch 12, **dadurch gekennzeichnet, dass** die Transportbox zwei oder mehrere Standfüße, insbesondere vier Standfüße, umfasst, die beim Ankoppeln automatisch einfahren und bei Abkoppeln automatisch ausfahren.

15. Ein Set zum Umwandeln eines Fahrrads in ein Lastenfahrrad, insbesondere eines E-Bikes in ein E-Lastenfahrrad, gemäß einem der vorangegangenen Ansprüche, **dadurch gekennzeichnet, dass** das modulare Vorderteil
a. einen passiven Insassenschutz, insbesondere Gurt und/oder Überrollbügel und/oder
b. Witterungsschutz für den Innenraum und/oder
c. eine Abdeckung, die Schutz bei Unfällen bietet und/oder die Sichtbarkeit des Fahrers auf Insassen des Vorbaus und auf den vor dem Transportsystem liegenden Weg gewährleistet
umfasst.
